# EUROPÄISCHE PATENTANMELDUNG

(11) **EP 1 175 829 A2**
(43) Veröffentlichungstag der Anmeldung: **30.01.2002**
(21) Anmeldenummer: 01116089.2
(22) Anmeldetag: 03.07.2001
(51) Int. Cl.: A01K 5/00, B65B 69/00, A01F 15/07

(54) **Vorrichtung zum Entfernen der Umhüllung von Ballen aus landwirtschaftlichen Erntegütern**

(30) Priorität: 27.07.2000 DE 10036606
(71) Anmelder: Lely Welger Maschinenfabrik GmbH, 38304 Wolfenbüttel (DE)
(72) Erfinder: Platon, Günter, Dipl.-Ing., 38321 Klein Denkte (DE); Tolksdorf, Diethard, 38321 Klein Denkte (DE)

(57) **Zusammenfassung**

Die Erfindung betrifft eine Vorrichtung zum Entfernen der Umhüllung (7) von Ballen (8) aus landwirtschaftlichen Erntegütern, bestehend aus wenigstens einer relativ zur Umhüllung (7) bewegbaren Trenneinrichtung zum Durchtrennen der Umhüllung (7) und einem Element (6) zum Entfernen der auf dem Ballen (8) befindlichen, aufgeschnittenen Umhüllung (7). Um die Trenneinrichtung zu verbessern, wird erfindungsgemäß vorgeschlagen, dass die Trenneinrichtung als Schneidmesser (5) ausgebildet ist, dessen quer zur Umhüllungsoberfläche gerichtete Schneide (22) die Umhüllung (7) während der Vorschubbewegung des Ballens und/oder des Schneidmessers (5) entlang des Ballenumfanges oder entlang einer oder mehrerer Ballenseiten (38 bis 41) durchschneidet.

## Beschreibung

Die Erfindung betrifft eine Vorrichtung zum Entfernen der Umhüllung von Ballen aus landwirtschaftlichen Erntegütern, bestehend aus wenigstens einer relativ zur Umhüllung bewegbaren Trenneinrichtung zum Durchtrennen der Umhüllung und einem Element zum Entfernen der auf dem Ballen befindlichen, aufgeschnittenen Umhüllung.

Die vorstehend beschriebene Vorrichtung läßt sich der WO Nr. 99/00758 entnehmen. Hier wird die auf einem Rundballen befindliche, aufzutrennende Folienumhüllung auf drei Seiten von einem Schneiddraht umschlossen. An den freien Enden ist jeweils ein Antriebsmotor angeordnet, während der Schneiddraht im Bereich der Ballenkanten etwa 90° gebogen und dort an Federn aufgehängt ist. Zum Durchtrennen der Folienumhüllung sollen die Antriebsmotore den Schneiddraht so stramm um den Ballen ziehen, dass die Umhüllung durch von außen nach innen, zum Ballenzentrum gerichtete Druckkräfte durch Quetschwirkung getrennt werden soll. Da die bekannten Ballen-Umwicklungssysteme prinzipbedingt an den Ballenstirnseiten mehr übereinanderliegende Folienlagen als am Ballenumfang erzeugen, ist mit der vorbekannten Vorrichtung kein zuverlässiges Auftrennen der Folienumhüllung entlang der gesamten, gewünschten Trennlinie möglich. Man könnte zwar die Umschlingungskraft des Schneiddrahtes so weit erhöhen, dass auch die relativ dicke Umhüllung an den Stirnseiten getrennt wird, als großer Nachteil erweist sich dann aber das Einschneiden des Schneiddrahtes in den Ballen, so dass die Aufhängefedern des Schneiddrahtes nicht mehr in der Lage sind, den Schneiddraht außer Eingriff mit dem Ballen zu bringen.

Der Erfindung liegt die Aufgabe zugrunde, die eingangs beschriebene Vorrichtung hinsichtlich der Trenneinrichtung zu verbessern.

Ausgehend von der eingangs beschriebenen Vorrichtung wird diese Aufgabe hinsichtlich der Trenneinrichtung dadurch gelöst, dass die Trenneinrichtung als Schneidmesser ausgebildet ist, dessen quer zur Umhüllungsoberfläche gerichtete Schneide die Umhüllung während der Vorschubbewegung des Ballens und/oder des Schneidmessers entlang des Ballenumfanges oder entlang einer oder mehrerer Ballenseiten durchschneidet.

Da das Auftrennen der Folienumhüllung erfindungsgemäß nunmehr durch eine Messerschneide erfolgt, wie es beim manuellen Verfahren bereits üblich ist, läßt sich die Folienumhüllung auf einfache Weise mit geringen Kräften entlang der gewünschten Trennlinie problemlos durchschneiden. Dabei steigen die Vorschubkräfte im Bereich größerer Foliendicke (mehrere Folienlagen) kaum an, weil die Folie beim Schnitt quer zur Oberfläche leicht trennbar ist. Es findet auch keine Verflechtung der Folie mit dem Ballen statt, so dass diese aufgrund des sauberen Schnittes auch leichter vom Ballen zu entfernen ist.

Eine besonders vorteilhafte Ausführungsform wird dann erreicht, wenn die wirksame Schneide mit der Umhüllungsoberfläche in Schnittrichtung gesehen einen Winkel kleiner 90° bildet, so dass die Umhüllung im ziehenden Schnitt durchtrennt wird, wobei die Schnitttiefe des Schneidmessers etwa der Dicke der Umhüllung entspricht.

Eine Ausgestaltung gemäß Anspruch 5 ergibt kurze Schneidzeiten, weil Ballen und Schneidmesser gleichzeitig relativ gegeneinander bewegt werden.

Das Entfernen der aufgeschnittenen Folienumhüllung kann durch wenigstens einen mit Mitnehmerelementen versehenen, antreibbaren Drehkörper erfolgen.

Die Vorrichtung kann stationär oder verfahrbar sein und besteht aus einem Gestell mit antreibbaren Stützelementen für das Auflegen und Drehen eines Ballens, welches ein Schneidmesser zum Durchtrennen der Folienumhüllung sowie wenigstens ein Element zum Entfernen der Folienumhüllung aufweist.

In vorteilhafter Weise weist die Vorrichtung ein an eine Hubvorrichtung eines Schleppers anbaubares Gestell mit wenigstens einem antreibbaren, den zylindrischen Rundballen aufspießenden Drehdorn auf, wenigstens einem Schneidmesser zum Durchtrennen der Folienumhüllung sowie wenigstens einem Element zum Entfernen der auf dem Ballen befindlichen Folienumhüllung.

Grundsätzlich ist es erfindungsgemäß möglich, die Vorrichtung an einen Futterverteil- oder Futtermischwagen zu kuppeln und mit einer Ladeeinrichtung für den Ballen zu kombinieren.

Weitere zweckmäßige Ausgestaltungen der Erfindung ergeben sich aus den übrigen Unteransprüchen und aus der nachfolgenden Beschreibung mehrerer Ausführungsbeispiele des Erfindungsgegenstandes anhand der Zeichnung.

Es zeigen:
- Fig. 1: in perspektivischer schematischer Darstellung eine erste Vorrichtung zum Entfernen der Folienumhüllung eines Rundballens,
- Fig. 2: eine Draufsicht auf das Schneidmesser und den Rundballen gemäß Fig. 1 bei Beginn des Durchtrennens der Folienumhüllung entlang dreier Ballenseiten,
- Fig. 3: als Einzeldarstellung in Seitenansicht den Drehkörper mit Mitnehmerelementen zum Erfassen und Abnehmen der Folienumhüllung,
- Fig. 4: eine zweite Vorrichtung zum Durchtrennen der Folienumhüllung entlang aller Ballenseiten,
- Fig. 5: eine Vorrichtung gemäß Figur 1 in schematischer Seitenansicht mit zwei Drehkörpern und Mitnehmerelementen zum Erfassen und Abnehmen der Folienumhüllung,
- Fig. 6: in schematischer Seitenansicht eine zweite Vorrichtung zum Entfernen der Folienumhüllung eines Rundballens ohne Schneidmesser,
- Fig. 7: in Frontansicht eine dritte Vorrichtung zum Entfernen der Folienumhüllung eines Rundballens und
- Fig. 8: in Draufsicht eine dritte Ausführungsform zum Durchtrennen der Folienumhüllung mit geradlinig verfahrbarem Schneidmesser.

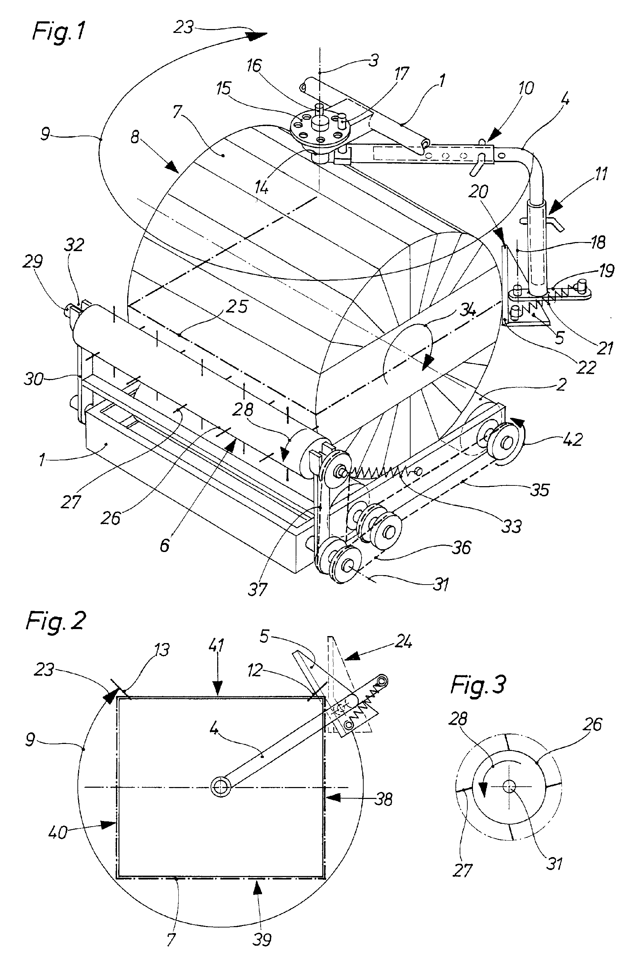

Die in den Fig. 1, 2 und 3 dargestellte Vorrichtung besteht aus einem Gestell 1, welches zwei im Abstand voneinander angeordnete Stützwalzen 2, einen um eine vertikale Achse 3 umlaufenden Dreharm 4 mit einem Schneidmesser 5 sowie einen parallel zu den Stützwalzen 2 angeordneten Drehkörper 6 trägt. Auf den Stützwalzen 2 liegt ein mit Folie 7 umwickelter, zylindrischer Rundballen 8, dessen Folienumhüllung zu entfernen ist. In Figur 1 ist die Umlaufbahn, die der Dreharm 4 mit montiertem Schneidmesser 5 beschreibt, mit 9 gekennzeichnet. Der Radius des Dreharmes 4 sowie die Höhe des Schneidmessers 5 sind relativ zu den Stützwalzen 2 so abgestimmt, dass der Dreharm 4 den Rundballen 8 etwa in seiner horizontalen Mittelachsebene frei umkreisen kann.

Zur Anpassung an unterschiedliche Ballendurchmesser ist die Höhe des Schneidmessers 5 relativ zu den Stützwalzen 2 und der Radius des Dreharmes 4 durch verriegelbare Schiebeführungen 10, 11 am Dreharm 4 verstellbar gestaltet. Die Steuerung des Umlaufweges, d. h. der Anfangs- 12 und Endstellungen 13 des Dreharmes 4 kann durch eine oberhalb der Lagerstelle 14 des Dreharmes 4 angeordnete Lochbildscheibe 15 mit zwei Sensoren 16, 17 erfolgen, die mit dem Dreharm 4 zusammenwirken.

Das Schneidmesser 5 hat eine dreieckförmige Gestalt und ist um eine zur Drehachse 3 des Dreharmes 4 parallele Achse 18 schwenkbar auf einer am unteren Ende des Dreharmes 4 befestigten Konsole 19 gelagert. In Arbeitsstellung 20 des Schneidmessers 5 zieht eine einerseits am Schneidmesser 5 angelenkte und anderenends an der Konsole 19 befestigte Zugfeder 21 die von einer Kathete gebildete Schneide 22 in einem Winkel kleiner 90° so gegen die Folie 7, dass die Folie während des Umlaufes des Dreharmes 4 in Richtung des Pfeiles 23 im ziehenden Schnitt durchgeschnitten wird. Wichtig ist, dass während des gesamten Umlaufes des Dreharmes 4 eine konstant hohe oder an kritischen Stellen auch höhere Schneidkraft des Schneidmessers 5 auf die Folie 7 wirkt, so dass diese auch an den Ecken, den Stirnseiten und an der Vorderseite des Rundballens 8 einwandfrei getrennt wird. Hierzu kann die Vorrichtung eine mechanische Steuerung des Schneidmessers 5 über die Wahl der Hebelarmverhältnisse und/oder der Federanlenkpunkte aufweisen. Zur Anwendung kann auch ein Hydrozylinder in Kombination mit einem Hydrospeicher kommen (nicht dargestellt), wodurch eine Anpassung der Schneidmesserstellung entsprechend der Ballenkontur erreicht wird. Das Ausschwenken und Halten des Schneidmessers 5 in einer in Figur 2 in Strichlinie dargestellten Außerbetriebsstellung 24 kann durch den Hydrozylinder oder ähnliche Einrichtungen erfolgen.

Unterhalb der horizontalen Mittelachsebene des Rundballens, d. h. unterhalb der gestrichelt gezeichneten Trennlinie 25 der Folienumhüllung ist der Drehkörper 6 zum Erfassen und Abnehmen der Folienumhüllung angeordnet. Der Drehkörper 6 besteht aus einer Walze 26 mit radial vorstehenden Zinken 27, deren Zinkenspitzen der Walze 26 in deren Drehrichtung 28 voreilen, siehe Figur 2. Über den Umfang der Walze 26 sind vier Zinkenreihen verteilt angeordnet, die jeweils von im Abstand nebeneinander angeordneten Zinken 27 gebildet werden. Theoretisch würde auch eine sich in axialer Richtung der Walze 26 erstreckende Zinkenreihe ausreichen. Die Walze 26 ist länger als die Breite des Ballens 8, so dass die Walzenenden mit ihren Wellenstummeln 29 über die Ballenstirnseiten vorstehen. Die Walze 26 ist drehbar in einem Schwenkrahmen 30 gelagert. Unten ist der Schwenkrahmen 30 beidseitig um eine parallel zu den Stützwalzen 2 angeordnete Drehachse 31 am Gestell 1 verschwenkbar angeordnet, oben weist der Schwenkrahmen 30 nach oben offene, U-förmige Aufnahmen 32 auf, in die die Wellenstummel 29 eingreifen. Eine oben am Schwenkrahmen 30 angelenkte und unten am Gestell 1 angelenkte Zugfeder 33 drückt die Walze 26 unter leichtem Anpressdruck unterhalb der Trennlinie 25 gegen die Folienumhüllung, so dass die Walze 26 federnd am Umfang des Rundballens 8 anliegt. Bei Drehung des Rundballens 8 in Richtung des Pfeiles 34 wird die Walze 26 in Richtung des Pfeiles 28 in Drehung versetzt, wobei die Umfangsgeschwindigkeit der Zinkenspitzen gleich oder etwas größer ist als die des Rundballens 8.

Der Antrieb des Dreharmes 4 erfolgt beispielsweise durch einen nicht dargestellten Hydromotor. Die Stützwalzen 2 sind miteinander durch einen Kettentrieb 35 verbunden, der von einem ebenfalls nicht dargestellten Hydromotor angetrieben wird. Der Antrieb der Walze 26 ist durch Kettentriebe 36, 37 mit dem Antrieb der Stützwalzen 2 gekoppelt.

Die Antriebe der verschiedenen Elemente werden durch eine hier nicht näher dargestellte Steuerung im Sinne des beschriebenen Arbeitsablaufes koordiniert. Als Antriebsquelle kann ein Schlepper dienen. Die Vorrichtung kann stationär, fahrbar oder auch zur Anhängung an den Schlepperfrontlader oder die Dreipunkthydraulik ausgestaltet sein. Durch Modifikation könnte man diese Vorrichtung auch zum Umwickeln von Ballen mit Folie umfunktionieren. Dazu müßte eine Stretcheinheit anstelle des Schneidmessers 5 und eine Schneid- und Klemmeinrichtung für die Folie anstelle des Drehkörpers 6 angebaut werden. Umgekehrt ist es auch denkbar, eine Folienumhüllvorrichtung als Vorrichtung zum Entfernen der Umhüllung von einem Ballen umzubauen. Die Vorrichtung zum Entfernen der Folienumhüllung kann mit einer nicht dargestellten Ladeeinrichtung für Ballen kombiniert an einen ebenfalls nicht dargestellten Futtermisch- oder Futterverteilwagen montiert sein, so dass der Rundballen 8 unmittelbar nach Entfernen der Folienumhüllung ohne Handarbeit weiter verarbeitet werden kann.

Die Arbeitsweise der erfindungsgemäßen Vorrichtung ist wie folgt:

Zunächst wird die Vorrichtung in bekannter Weise mit der Antriebsquelle des Schleppers gekoppelt und ein mit Folie 7 umhüllter Rundballen 8 auf die Stützwalzen 2 gelegt. Bei ruhendem Rundballen 8 sticht das Schneidmesser 5 mit seiner Schneide 22 in der in Figur 1 und Figur 2 ersichtlichen Anfangs-Dreharmstellung 12 an einem Ballenende in die Folie 7 ein. Dann wird die Folienumhüllung 7 entlang der gestrichelt gezeichneten Trennlinie 25 während der Rotation des Dreharmes 4 in Richtung des Pfeiles 23 im ziehenden Schnitt durch die Schneide 22 getrennt. Nach etwa 270° Winkelumdrehung bleibt der Dreharm 4 in der Endstellung 13 automatisch stehen, die Folienumhüllung ist an den drei Seiten 38, 39, 40in eine obere und untere Hälfte getrennt, während die vierte Seite 41 ungetrennt bleibt. Nun wird der Rundballen 8 durch Antrieb der Stützwalzen 2 in Pfeilrichtung 42 in Drehung versetzt, gleichzeitig dreht sich die Walze 26 in Richtung des Pfeiles 28, wobei die Zinkenspitzen in die Folie 7 einstechen und die Folie 7 während der Drehung der Walze 26 festhalten, so dass diese vom Ballenmantel und von den Stirnseiten abgezogen und um die Walze 26 gewickelt wird. Nach etwas mehr als einer Ballenumdrehung ist die gesamte Folienumhüllung vom Ballen entfernt und auf der Walze 26. Die Zinkenlänge ist so lang gewählt, dass ca. 3 Folienumhüllungen aufgewickelt werden können. Die Walze 26 ist aus den U-förmigen Aufnahmen 32 leicht entnehmbar und eine leere Walze einsetzbar. Der abgewickelte Rundballen 8 kann ohne jegliche Handarbeit verarbeitet werden, in dem dieser z. B. mit dem Frontlader in einen Futtermischwagen oder in ein Ballenauflösegerät gefördert wird.Es ist auch möglich, die Walze 26 durch eine Auflösewalze mit Mitnehmern und/ oder Messer auszutauschen, wodurch auf einfache Weise ein Ballenabwickel- oder Ballenauflösegerät geschaffen wird.

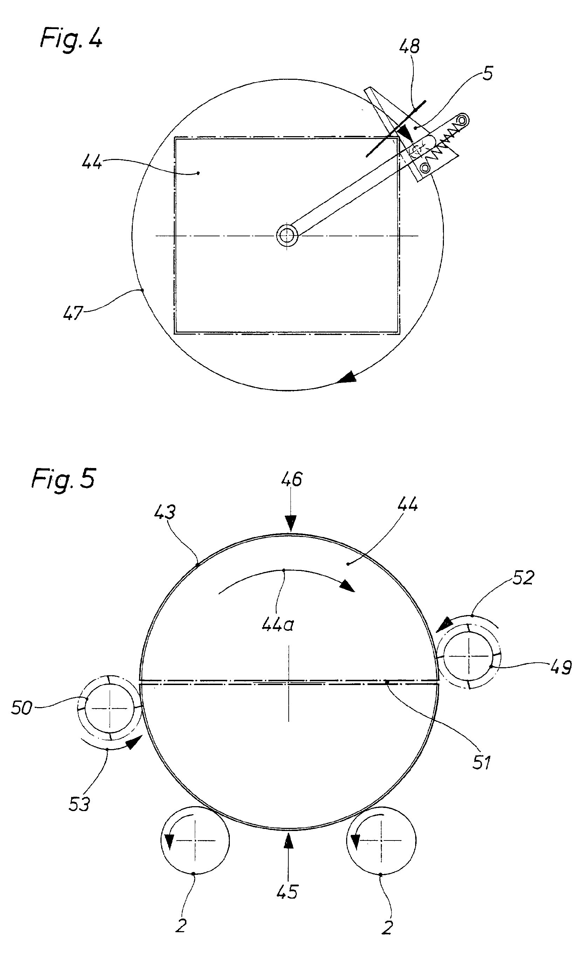

Bei der Ausführungsform gemäß Fig. 4 und 5 erfolgt das Durchtrennen der Folienumhüllung 43 entlang aller vier Seiten eines Rundballens 44 in eine untere 45 und eine obere Hälfte 46 der Folienumhüllung 43. Wie aus Fig. 4 ersichtlich, die eine Draufsicht auf den Rundballen 44 zeigt mit eingezeichneter Umlaufbahn 47 des Dreharmes 4, umkreist das Schneidmesser 5 ausgehend vom Startpunkt 48 den Rundballen 44 um mindestens 360° Zum sicheren Durchtrennen kann das Schneidmesser 5 auch etwas über den Startpunkt 48 hinauslaufen.

Das Ergreifen und Abnehmen der oberen 46 und der unteren Folienhälfte 45 erfolgt nunmehr durch je einen Drehkörper 49, 50 mit Mitnehmerzinken. Ein Drehkörper 49 liegt an der oberen Hälfte 46 der Folienumhüllung 43 oberhalb der Trennlinie 51 an, während der andere 50 an der unteren Hälfte 45 der Folienumhüllung 43 unterhalb der Trennlinie 51 anliegt. Die angetriebenen Stützwalzen 2 drehen den Rundballen 44 in Richtung des Pfeiles 44a, dabei rotieren die angetriebenen Drehkörper 49, 50 in Richtung der Pfeile 52, 53, erfassen jeweils ein Folienende und wickeln jeweils eine Hälfte 45, 46 der Folienumhüllung 43 während einer Rundballendrehung von etwas mehr als 180° auf sich auf. Die Folie wird hierbei schneller entfernt. Jeder Drehkörper 49 nimmt nur eine Hälfte der Folienumhüllung 43 auf.

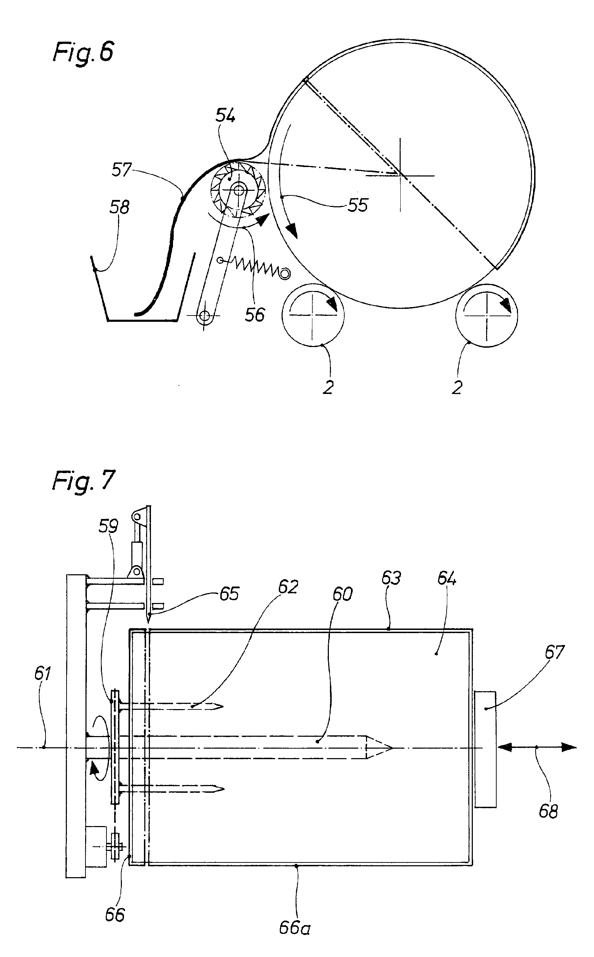

Das in Figur 6 gezeigte Ausführungsbeispiel entspricht der Vorrichtung gemäß Fig. 1 bis 3, jedoch hat der Drehkörper 54 relativ zur Rundballendrehrichtung 55 eine andere Drehrichtung 56. Der Drehkörper 54 erfasst die an drei Seiten aufgeschnittene Folienumhüllung 57 und fördert sie nach dem Überkopfprinzip während der Rotation des Rundballens über sich in einen Behälter 58 oder in ein Folienverdichtungsaggregat anstatt diese auf den Drehkörper 54 aufzuwickeln. Nach dem Entfernen der Folienumhüllung kann mit dieser Einrichtung der Rundballen auch abgerollt werden, indem der Rundballen entgegengesetzt zu seiner ursprünglichen Drehrichtung in der Rundballenpresse gedreht wird.

Figur 7 zeigt eine rotierend angetriebene Scheibe 59 mit einem Drehdorn 60, der in Richtung der Drehachse 61 der Scheibe 59 verläuft und an seinem Ende spitz zuläuft. Parallel zum Drehdorn 60 sind außermittig Haltedorne 62 an der Scheibe 59 befestigt. Ein mit Folie 63 umhüllter Rundballen 64 wird, wie in Figur 7 dargestellt, auf den Drehdorn 60 aufgespießt, so dass der Drehdorn 60 etwa in der Symmetrieachse zu liegen kommt. Die außermittig angeordneten Haltedorne 62 haben die Aufgabe, zu verhindern, dass sich der Drehdorn 60 bei Rotation der Scheibe 59 in dem Rundballen 64 leer dreht, anstatt den schweren Rundballen 64 bei seiner Drehung mitzunehmen. Die Scheibe 59 ist an einem nicht dargestellten Gestell gelagert, das beispielsweise am Frontlader eines Schleppers montiert ist. Am Umfang des aufgespießten Rundballens 64 ist benachbart zur Ballenstirnseite ein Schneidgerät 65 mit einstellbarer Schnitttiefe am Gestell angeordnet, welches während der Rotation des Rundballens 64 die stirnseitige Folienumhüllung 66 entlang des gesamten Ballenumfanges durchschneidet und so von der mantelseitigen Folienumhüllung 66a abtrennt. Zum Erfassen und Abziehen der haubenartigen Folienumhüllung vom Rundballen kann beispielsweise ein an sich bekannter Saug-Blaskopf 67 dienen, der in Richtung der Pfeile 68 hin- und herbewegbar und/oder seitlich wegschwenkbar am Gestell gelagert ist.Durch Weiterdrehung des Rundballens 64 nach dem Entfernen der Folie kann der Rundballen 64 abgewickelt werden.

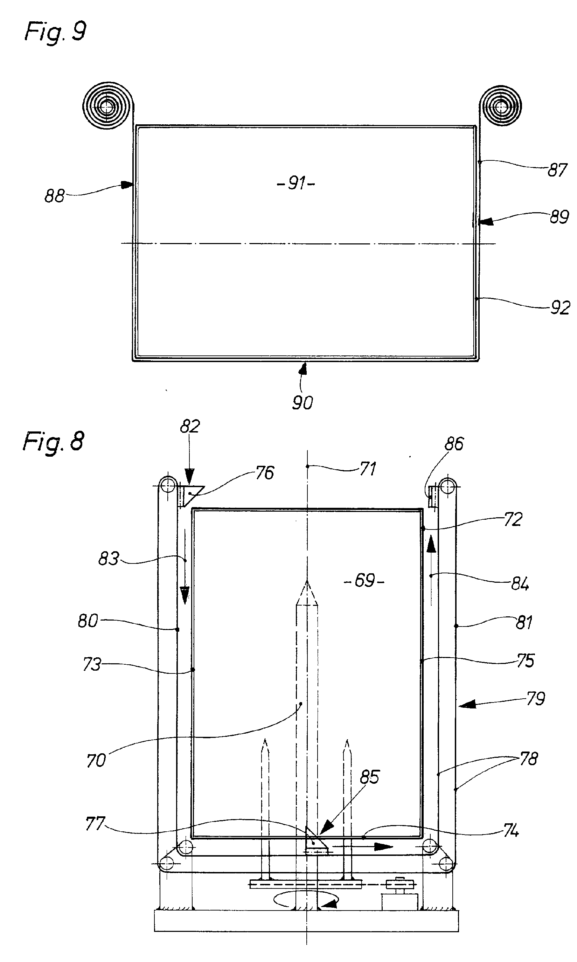

Fig. 8 zeigt einen mit Folie umhüllten Rundballen 69, der auf einem Drehdorn 70 gemäß Figur 7 aufgespießt ist und mittels nicht dargestelltem Frontlader so angehoben ist, dass sich seine Rotationsachse 71 etwa horizontal zum Erdboden befindet. Das Aufschneiden der Folienumhüllung 72 erfolgt in der horizontalen Mittelachsebene des Rundballens 69 an drei Ballenseiten 73, 74, 75 durch geradlinig geführte Schneidmesser 76, 77, die nach Art eines Bandmessers arbeiten. Die Folienumhüllung 72 auf der dem Drehdorn 70 abgewandten Ballenstirnseite wird nicht durchtrennt. Als Antriebselement für die Schneidmesser 76, 77 dient eine Gelenkkette, eine Zahnstange oder ein Zahnriemen / Riemen 78, der als U-förmige endlose Schlaufe 79 mit zwei im wesentlichen parallelen, gegensinnig bewegbaren Trumen 80, 81 den Rundballen auf drei Seiten 73, 74, 75 etwa in horizontaler Mittelachsebene umgibt und mit einer nicht dargestellten Antriebseinrichtung gekoppelt ist. Es sind zwei Schneidmesser 76, 77 auf dem dem Rundballen 69 zugewandten Trum 80 so gegeneinander versetzt angeordnet, dass jedes Messer 76, 77 während der linearen Vorschubbewegung in Richtung der Pfeile 83, 84 jeweils die halbe Länge der gesamten, zu durchschneidenden Folienlänge durchtrennt. Jedes Schneidmesser 76, 77 ist schwenkbar am Trum 80 oder in einer nicht dargestellten Führungsschiene gelagert und ist in Abhängigkeit von der Trumposition beispielsweise durch nicht dargestellte Nocken wegklappbar.

Während des Aufspießens des Rundballens 69 sind die Schneidmesser 76, 77 weggeklappt. In Figur 8 sind die Schneidmesser 76, 77 in Arbeitsstellung 82 bei Beginn eines Schneidvorganges dargestellt. Durch Antrieb der Gelenkkette, des Zahnriemens oder der Zahnstange wird die Folie im ziehenden Schnitt durch Bewegung der Schneidmesser 76, 77 in Richtung der Pfeile 83, 84 durchtrennt. Der Schneidvorgang ist beendet, wenn das erste Messer 76 die Startposition 85 des zweiten Messers 77 erreicht hat, welches sich dann in in Strichlinie dargestellter Außerbetriebsstellung 86 befindet. Versuche haben ergeben, dass die obere und untere Folienumhüllungshälfte bei kurzer Rotation des angehobenen Rundballens 69 ohne zusätzliche Elemente sich jeweils von allein vom Ballen ablöst und nach unten auf den Erdboden fällt. Gegebenenfalls sind der Vorrichtung zusätzliche Greifelemente zum Ablösen der Folienumhüllung während der Ballenrotation zugeordnet, die aber nur kurzzeitig und bei bestimmten Halmgütern nötig sind, an der die Folie kleben kann.

## Patentansprüche

1. Vorrichtung zum Entfernen der Umhüllung (7, 63, 72) von Ballen (8, 44, 64, 69) aus landwirtschaftlichen Erntegütern, bestehend aus wenigstens einer relativ zur Umhüllung (7, 63, 72) bewegbaren Trenneinrichtung zum Durchtrennen der Umhüllung (7, 63, 72) und einem Element (6, 49, 50, 54, 67, 70) zum Entfernen der auf dem Ballen (8, 44, 64, 69) befindlichen, aufgeschnittenen Umhüllung (7, 45, 46, 66, 66 a, 72), **dadurch gekennzeichnet, dass** die Trenneinrichtung als Schneidmesser (5, 65, 76, 77) ausgebildet ist, dessen quer zur Umhüllungsoberfläche gerichtete Schneide (22) die Umhüllung (7, 63, 72) während der Vorschubbewegung des Ballens (64) und/oder des Schneidmessers (5, 76, 77) entlang des Ballenumfanges oder entlang einer oder mehrerer Ballenseiten (38 bis 41 und 73 bis 75) durchschneidet.

2. Vorrichtung nach Anspruch 1, **dadurch gekennzeichnet, dass** die wirksame Schneide (22) mit der Umhüllungsoberfläche in Schnittrichtung (23, 83, 84) gesehen einen Winkel kleiner 90° bildet, so dass die Umhüllung (7, 72) im ziehenden Schnitt durchtrennt wird, wobei die Schnitttiefe des Schneidmessers (5, 76, 77) etwa der Dicke der Umhüllung (7, 72) entspricht.

3. Vorrichtung nach Anspruch 1 oder 2, **dadurch gekennzeichnet, dass** das Schneidmesser (5, 76, 77) den ruhenden Ballen (8, 69) umfährt.

4. Vorrichtung nach Anspruch 1 oder 2, **dadurch gekennzeichnet, dass** das Schneidmesser (65) ortsfest aber beweglich gelagert ist, während der Ballen (64) in Drehung versetzt wird.

5. Vorrichtung nach einem oder mehreren der Ansprüche 1 bis 4, **dadurch gekennzeichnet, dass** die Umhüllung (7, 63) bei gleichzeitiger aber gegenläufiger Drehbewegung von Schneidmesser (5, 65) und Ballen (8, 64) um eine gemeinsame Drehachse aufgeschnitten wird.

6. Vorrichtung nach einem oder mehreren der vorhergehenden Ansprüche, **dadurch gekennzeichnet, dass** Mittel vorgesehen sind, um das Schneidmesser (5, 65, 76, 77) in und außer Schneideingriff mit der Umhüllung (7, 63, 72) zu bringen.

7. Vorrichtung nach einem oder mehreren der vorhergehenden Ansprüche, **dadurch gekennzeichnet, dass** Mittel vorgesehen sind, um die Anpresskraft des Schneidmessers während des Schneidvorganges zu verstellen.

8. Vorrichtung nach Anspruch 7, **dadurch gekennzeichnet, dass** die Anpresskraft in Abhängigkeit von der Umhüllungsdicke und/oder der Ballenkontur veränderbar ist.

9. Vorrichtung nach einem oder mehreren der vorhergehenden Ansprüche, **dadurch gekennzeichnet, dass** das Schneidmesser (76, 77) entlang einer oder mehrerer Ballenseiten (72, bis 74) geradlinig verschiebbar angeordnet ist.

10. Vorrichtung nach Anspruch 1, **dadurch gekennzeichnet, dass** wenigstens ein mit Mitnehmerelementen versehener, antreibbarer Drehkörper (6, 49, 50, 54) als Element zum Entfernen der aufgeschnittenen Folienumhüllung (7, 43, 57) vorgesehen ist.

11. Vorrichtung nach Anspruch 10, **dadurch gekennzeichnet, dass** der Drehkörper (6, 49, 50, 54) eine Walze (26) mit radial vorstehenden, in axialer Richtung und über den Walzenumfang verteilten Zinken (27) ist, deren Zinkenspitzen der Walze (26) in deren Drehrichtung (28) voreilen.

12. Vorrichtung nach Anspruch 10 oder 11, **dadurch gekennzeichnet, dass** der Drehkörper (6, 49, 50, 54) federnd am Umfang eines mit Folie (7, 43) umhüllten Ballens (8, 44) anliegt, wobei die aufgeschnittene Folienumhüllung im Bereich der Trennlinie (25) durch den Drehkörper (6, 49, 50, 54) ergriffen wird.

13. Vorrichtung nach Anspruch 12, **dadurch gekennzeichnet, dass** Ballen (8) und Drehkörper (6) gegensinnig angetrieben sind, so dass die Folienumhüllung (7) vom Ballen (8) abgewickelt und auf den Drehkörper (6) aufgewickelt wird.

14. Vorrichtung nach Anspruch 12, **dadurch gekennzeichnet, dass** Ballen und Drehkörper (54) gleichsinnig angetrieben sind, so dass die Folienumhüllung (57) vom Ballen abgenommen wird und nach dem Überkopfprinzip über den Drehkörper (54) abläuft.

15. Vorrichtung nach Anspruch 12, **dadurch gekennzeichnet, dass** nur der Drehkörper (6) angetrieben ist und bei ruhendem Ballen um den Ballen herumgeführt wird, wobei sich die Folienumhüllung auf den Drehkörper (6) aufwickelt.

16. Vorrichtung nach Anspruch 12, **dadurch gekennzeichnet, dass** der Drehkörper (6, 49, 50) ortsfest aber drehbar und beweglich angeordnet ist und der Ballen (8, 44) rotierend angetrieben ist, wobei die Folienumhüllung (7, 43) bei rotierendem Ballen (8, 44) auf den Drehkörper (6, 49, 50) aufgewickelt wird.

17. Vorrichtung nach einem der Ansprüche 10 bis 13 und 14 bis 16, **dadurch gekennzeichnet, dass** der Drehkörper (6, 49, 50) etwa 3 bis 4 Folienumhüllungen (7, 43) aufnimmt und dann der bewickelte Drehkörper (6, 49, 50) durch einen leeren auszuwechseln ist, wobei der Drehkörper leicht abnehmbar angeordnet ist.

18. Vorrichtung nach Anspruch 1, **dadurch gekennzeichnet, dass** ein Saugelement (68) zum Entfernen der aufgeschnittenen Folienumhüllung (66a) dient.

19. Vorrichtung nach Anspruch 1, **dadurch gekennzeichnet, dass** das Element zum Entfernen der aufgeschnittenen Folienumhüllung eine einen aufgeschnittenen Folienabschnitt haltende Klemmeinrichtung aufweist, welche den Folienabschnitt zwischen sich festklemmt.

20. Vorrichtung nach einem oder mehreren der vorhergehenden Ansprüche, **gekennzeichnet durch** ein Gestell (1) mit antreibbaren Stützelementen (2) für das Auflegen und Drehen eines Ballens (8, 44), welches ein Schneidmesser (5) zum Durchtrennen der Folienumhüllung (7, 43) sowie wenigstens ein Element (6, 49, 50) zum Entfernen der Folienumhüllung (7, 43) aufweist.

21. Vorrichtung nach Anspruch 20, **dadurch gekennzeichnet, dass** die Stützelemente (2) in einem Drehtisch antreibbar gelagert sind, welcher zusätzlich um eine vertikale Mittelachse drehbar angeordnet und antreibbar ist.

22. Vorrichtung nach einem oder mehreren der Ansprüche 1 bis 19, **gekennzeichnet durch** ein an eine Hubvorrichtung eines Schleppers anbaubares Gestell mit wenigstens einem antreibbaren, einen zylindrischen Rundballen (64, 69) aufspießenden Drehdorn (60, 70), wenigstens einem Schneidmesser (65, 76, 77) zum Durchtrennen der Folienumhüllung (66, 66a, 72) sowie wenigstens einem Element (6, 67, 70) zum Entfernen der auf dem Ballen befindlichen Folienumhüllung (66a, 72).

23. Vorrichtung nach einem oder mehreren der vorhergehenden Ansprüche, **dadurch gekennzeichnet, dass** Mittel (60, 70) vorgesehen sind zum Aufnehmen, Anheben und Abladen eines Ballens.

24. Vorrichtung nach einem oder mehreren der vorhergehenden Ansprüche, **dadurch gekennzeichnet, dass** diese an einen Futterverteil- oder Futtermischwagen kuppelbar und mit einer Ladeeinrichtung für den Ballen kombiniert ist.

25. Vorrichtung nach einem oder mehreren der vorhergehenden Ansprüche, **dadurch gekennzeichnet, dass** diese als ein Ballenabwickel- oder als Ballenauflösegerät ausgestaltet ist.

26. Vorrichtung nach einem oder mehreren der vorhergehenden Ansprüche, **dadurch gekennzeichnet, daß** die Vorrichtung zum wahlweisen Betrieb als Vorrichtung zum Umhüllen des Ballens mit Folie ausgebildet ist.

27. Vorrichtung nach einem oder mehreren der vorhergehenden Ansprüche, **dadurch gekennzeichnet, dass** die Folienumhüllung (7, 43, 57, 63, 72, 92) einem Rollverdichter, bestehend aus gegenläufigen Bändern oder anderen Folienpressen oder Sammelbehältern (58) zugeführt wird.

28. Silagerundballen mit einer Folienumhüllung, **dadurch gekennzeichnet, dass** eine unter der Folienumhüllung befindliche Umhüllung zur Formfixierung des Ballens aus verfütterbarem Material besteht, welches nicht vom Ballen entfernt werden muss.
